# EUROPEAN PATENT APPLICATION

(11) **EP 4 790 801 A1**
(43) Date of publication of application: **12.08.2026**
(21) Application number: 26153725.2
(22) Date of filing: 23.01.2026
(51) Int. Cl.: H01M 50/103, H01M 50/133, H01M 50/15, H01M 50/166

(54) **HOUSING AND BATTERY CELL**

(30) Priority: 26.01.2025 CN 202510124971
(71) Applicant: AESC Japan Ltd., Yokohama-shi, Kanagawa 220-0012 (JP)
(72) Inventor: CHEN, Hu, Jiangyin City, Wuxi City, Jiangsu 214443 (TW)
(74) Representative: Becker, Eberhard

(57) **Abstract**

Disclosed are a housing, a battery cell, and a battery. The housing (100) includes: a first side panel (110) and a second side panel (120) arranged adjacently along a circumferential direction of a housing opening (140), and a maximum thickness of the first side panel is less than a maximum thickness of the second side panel; and a connection corner panel (130) for connecting the first and second side panels. The connection corner panel is provided with a corner panel first segment (131), a corner panel second segment (132), and a corner panel third segment (133) in sequence in a height direction of the housing. A maximum thickness of the corner panel second segment is greater than a maximum thickness of the corner panel first segment. A maximum thickness of the corner panel third segment is less than or equal to the maximum thickness of the corner panel second segment.

## Description

### Technical Field

The present disclosure relates to the field of battery technology, and in particular to a housing, a battery cell and a battery.

### Description of Related Art

Currently, a housing of a battery cell is prone to deformation or cracking during use, necessitating improvements to a structure of the housing of the battery cell.

### SUMMARY

### Technical problem

In view of this, the present disclosure provides a housing, a battery cell and a battery, for solving part or all of the technical problems mentioned above.

### Solution to Problem

The present disclosure provides a housing, having a housing opening along a height direction of the housing, and the housing includes:
a first side panel and a second side panel, arranged adjacently along a circumferential direction of the housing opening, and a maximum thickness of the first side panel is less than a maximum thickness of the second side panel; and
a connection corner panel, configured for connecting the first side panel and the second side panel,
the connection corner panel is provided with a corner panel first segment, a corner panel second segment and a corner panel third segment in sequence along the height direction of the housing,
a maximum thickness of the corner panel second segment is greater than a maximum thickness of the corner panel first segment, and
a maximum thickness of the corner panel third segment is less than or equal to the maximum thickness of the corner panel second segment.

Further, in a direction pointing from a side close to the first side panel toward a side close to the second side panel, the thickness of the corner panel second segment gradually thickens; and/or,
in a direction pointing from a side close to the housing opening toward a side away from the housing opening, the thickness of the corner panel second segment gradually thickens.

Further, a thickness difference between the maximum thickness and a minimum thickness of the corner panel second segment is less than or equal to 0.3mm.

Further, in the direction pointing from a side close to the first side panel toward a side close to the second side panel, a thickness of the corner panel third segment gradually thickens.

Further, the corner panel third segment includes a first segment and a second segment sequentially connected in the height direction of the housing,
the first segment is provided close to the housing opening,
in the direction pointing from the side close to the first side panel toward the side close to the second side panel, a thickness increase of the first segment is greater than a thickness increase of the second segment.

Further, the first segment includes a corner panel upper segment and a corner panel transition segment connected to each other,
the corner panel transition segment is located between the corner panel upper segment and the second segment, and
a thickness of the corner panel transition segment gradually reduces from the corner panel upper segment toward the second segment.

Further, a thickness difference between a maximum thickness and a minimum thickness of the corner panel upper segment is less than or equal to 0.4mm, and
a thickness difference between a maximum thickness and a minimum thickness of the second segment is less than or equal to 0.3mm.

Further, the first side panel is provided with a first panel first segment and a first panel second segment connected to each other in the height direction of the housing,
a maximum thickness of the first panel first segment is greater than a maximum thickness of the first panel second segment, and
the first panel first segment is provided close to the housing opening.

Further, the first panel first segment includes a first panel upper segment and a first panel transition segment connected to each other,
the first panel transition segment is connected between the first panel upper segment and the first panel second segment, and
a thickness of the first panel transition segment gradually reduces from the first panel upper segment toward the first panel second segment.

Further, the first panel upper segment is connected with both the corner panel first segment and the corner panel second segment,
the first panel second segment is connected with the corner panel third segment, and
the thickness of the first panel second segment is less than the maximum thickness of the corner panel third segment.

Further, a thickness difference between the first panel upper segment and the first panel second segment is less than or equal to 0.3mm,
a length of the first panel first segment in the height direction of the housing is greater than or equal to 0.5mm, and
a length of the first panel transition segment in the height direction of the housing is greater than or equal to 0.3mm.

Further, the second side panel is provided with a second panel first segment and a second panel second segment in sequence in the height direction of the housing,
a maximum thickness of the second panel first segment is less than a maximum thickness of the second panel second segment, and
the second panel first segment is provided close to the housing opening.

Further, the second panel second segment is provided with a first sub-segment and a second sub-segment connected to each other in the height direction of the housing,
the first sub-segment is provided close to the housing opening,
a maximum thickness of the first sub-segment is greater than a maximum thickness of the second sub-segment,
the first sub-segment is connected with the corner panel second segment and a part of the corner panel third segment, and
the second sub-segment is connected with another part of the corner panel third segment.

Further, the first sub-segment includes a second panel upper segment and a second panel transition segment, and
a thickness of the second panel transition segment gradually reduces from the second panel upper segment toward the second sub-segment.

Further, the second panel first segment is connected with the corner panel first segment,
the second panel second segment is connected with both the corner panel second segment and the corner panel third segment, and
the maximum thickness of the second panel second segment is greater than or equal to the maximum thickness of the corner panel third segment, and less than or equal to the maximum thickness of the corner panel second segment.

Further, a thickness difference between the second panel upper segment and the second sub-segment is less than or equal to 0.3mm, and
a length of the second panel transition segment in the height direction of the housing is greater than or equal to 0.3mm.

Further, an area of the first side panel is greater than an area of the second side panel.

Based on the same inventive concept, the present disclosure also provides a battery cell, including:
the housing described in any one of the above embodiments;
a cover panel assembly, covering the housing opening and forming an accommodation space with the housing; and
a bare cell, located in the accommodation space;
wherein, an edge of the corner panel second segment away from the housing opening is located above the bare cell, and
at least a part of the corner panel third segment is disposed opposite to the bare cell.

Further, the cover panel assembly includes a cover panel body and an insulation member connected to a side of the cover panel body close to the accommodation space,
the first side panel is provided with a first panel first segment and a first panel second segment connected to each other in the height direction of the housing,
a distance from an edge of the first panel second segment close to the first panel first segment to the housing opening is a first distance,
a distance from a surface of the insulation member away from the cover panel body to the housing opening is a second distance, and
the first distance is greater than the second distance.

Based on the same inventive concept, the present disclosure also provides a battery, including the battery cell described in any one of the above embodiments.

### Technical effect

As can be seen from the above, the present disclosure provides the housing, the battery cell and the battery, wherein the housing sets the connection corner panel as the corner panel first segment, the corner panel second segment and the corner panel third segment connected in sequence. The corner panel first segment is provided to connect with the cover panel assembly, the corner panel second segment serves as a region adjacent to the corner panel first segment, and a pressure generated on the housing by the gravity of the cover panel assembly is mainly concentrated on the corner panel second segment. Therefore, the thickness of the corner panel second segment is set to be greater than that of the corner panel first segment, and greater than or equal to that of the corner panel third segment, that is, the corner panel second segment is set to be the thickest, so that the corner panel second segment is able to bear the pressure of the cover panel assembly on the housing, and deformation or cracking will not occur due to the support provided for the cover panel assembly, thus improving the use reliability of the battery cell.

In addition, the thickness of the corner panel third segment is set to be less than or equal to the thickness of the corner panel second segment, enabling the distance between the corner panel third segment and the bare cell to be greater than or equal to the distance between the corner panel second segment and the bare cell. Therefore, the risk of deformation or cracking of the connection corner panel due to expansion stress of the bare cell and the like will be reduced. Correspondingly, the problem of squeezing damage caused by the corner panel third segment to the expanded bare cell may also be effectively avoided.

### BRIEF DESCRIPTION OF THE DRAWINGS

In order to more clearly describe the technical solutions in the embodiments of the present disclosure or the prior art, the accompanying drawings required to be used in the description of the embodiments or the prior art will be briefly introduced below. Clearly, the accompanying drawings in the following description are only some embodiments of the present disclosure. For those of ordinary skill in the art, other accompanying drawings may also be obtained according to these accompanying drawings without creative labor.
FIG. 1 is a schematic top view of a battery according to an embodiment of the present disclosure;
FIG. 2 is a schematic cross-segmental view taken along a A-A section in FIG. 1;
FIG. 3 is a first enlarged view of a part A in FIG. 2;
FIG. 4 is a schematic top view of a housing in an embodiment of the present disclosure;
FIG. 5 is a schematic cross-segmental view taken along a B-B section in FIG. 4;
FIG. 6 is an enlarged view of a part B in FIG. 5;
FIG. 7 is a perspective view of a housing in an embodiment of the present disclosure;
FIG. 8 is an enlarged view of a part C in FIG. 7;
FIG. 9 is a perspective view of a housing in an embodiment of the present disclosure;
FIG. 10 is an enlarged view of a part D in FIG. 9.

### DESCRIPTION OF THE EMBODIMENTS

To make the objectives, technical solutions and advantages of the present disclosure clearer, the present disclosure is further described in detail below in combination with specific embodiments and with reference to the accompanying drawings.

It should be noted that, unless otherwise defined, the technical terms or scientific terms used in the embodiments of the present disclosure should have the ordinary meanings understood by those with general skills in the field to which the present disclosure belongs. The terms "first", "second" and similar words used in the present disclosure do not indicate any order, quantity or importance, but are only provided to distinguish different components. Words such as "include" or "comprise" and similar words mean that the elements or items appearing before the word cover the elements or items listed after the word and their equivalents, without excluding other elements or items. Words such as "connect" or "connected" and similar words are not limited to physical or mechanical connections, but may include electrical connections, whether direct or indirect. "Upper", "lower", "left", "right", and the like are only provided to indicate relative positional relationships, and when the absolute position of the described object changes, the relative positional relationship may also change accordingly.

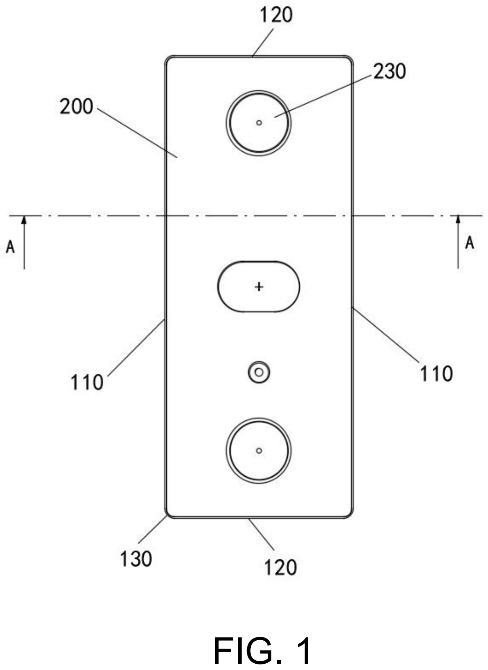

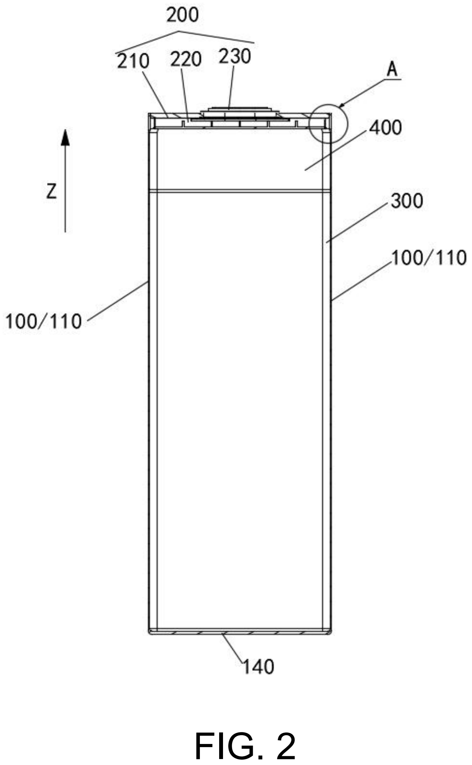

In the related art, a battery cell, as shown in FIG. 1 and FIG. 2, includes: a housing 100, a cover panel assembly 200 and a bare cell 400, wherein the housing 100 has a housing opening 140 along a height direction of the housing 100. The height direction of the housing 100 is a Z direction in FIG. 2. The cover panel assembly 200 covers the housing opening 140 and forms an accommodation space 300 with the housing 100. The bare cell 400 is located in the accommodation space 300. The cover panel assembly 200 includes a cover panel body 210 and an insulation member 220 connected to a side of the cover panel body 210 close to the accommodation space 300. In addition, for ease of subsequent description, a side of the housing 100 close to the bare cell 400 is defined as an inner surface, and correspondingly, a side of the housing 100 away from the bare cell 400 is defined as an outer surface.

The housing 100 of the battery cell has to bear the gravity of the cover panel assembly 200 during use. Specifically, the cover panel body 210 of the cover panel assembly 200 is normally welded at the housing opening 140, therefore the weight of the cover panel body 210 may produce a downward pressure on the housing 100. This pressure is mainly concentrated in a region of the housing 100 opposite to the cover panel assembly 200, i.e., a top region of the housing 100, and the long-term effect of this pressure may cause deformation or cracking in the top region of the housing 100.

In addition, the housing 100 of the battery cell has to bear an expansion action of the bare cell 400. Specifically, during a charging and discharging process of the battery cell, chemical reactions occur inside the battery cell, causing the volume of the bare cell 400 to expand. This expansion stress mainly acts on a region of the housing 100 opposite to the bare cell 400, i.e., a region below the top region of the housing 100, and this expansion stress may cause the housing 100 to be subjected to an outward thrust. If a strength of the housing 100 is insufficient to resist this expansion stress, deformation or cracking may be prone to occur, thereby affecting the normal operation of the battery cell.

Based on the above description, the housing 100 is prone to deformation or cracking during use of the battery cell. The applicant has found that it is necessary to improve the structure of a connection corner panel 130 and/or a side panel constituting the housing 100 to solve the above problems.

The technical solutions of the present disclosure are described in detail below in combination with specific embodiments and accompanying drawings.

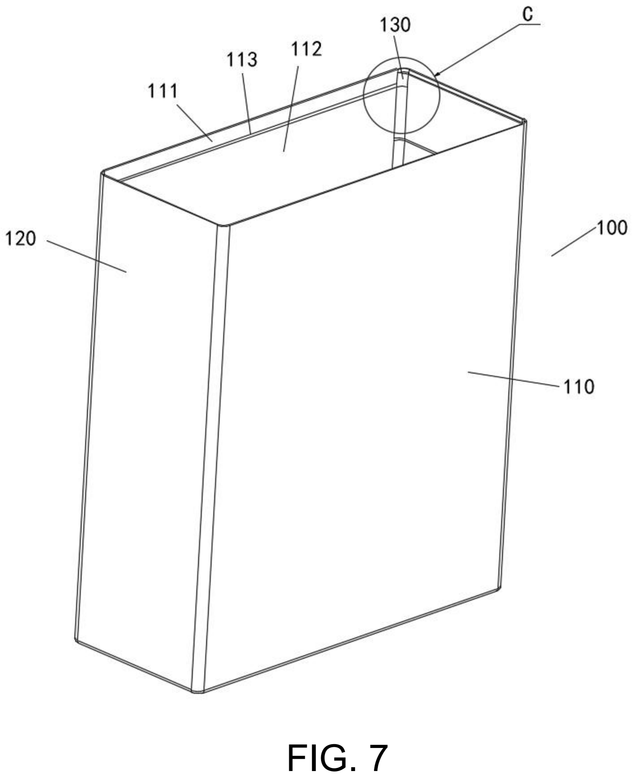

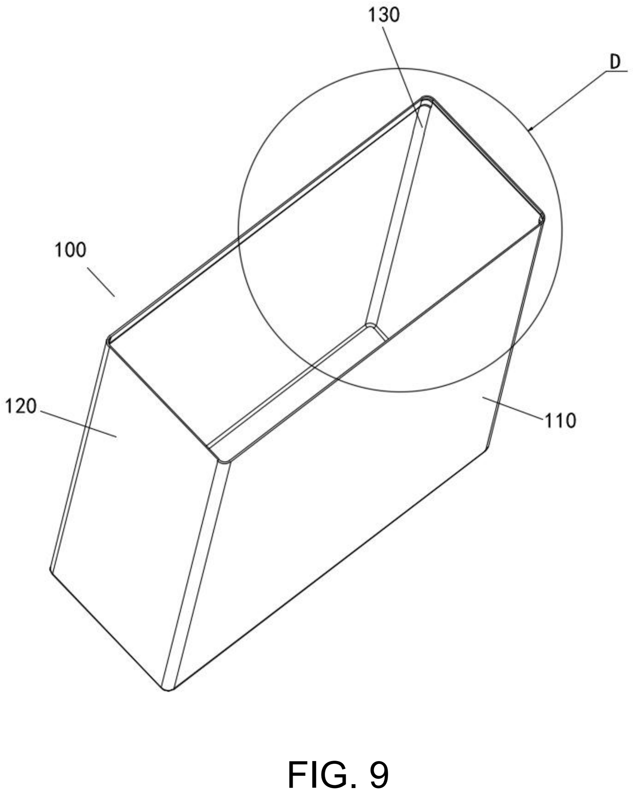

In some embodiments, as shown in FIG. 7 to FIG. 10, the housing 100 has the housing opening 140 along the height direction of the housing 100, and the housing 100 includes:
a first side panel 110 and a second side panel 120, arranged adjacently along a circumferential direction of the housing opening 140, wherein a maximum thickness of the first side panel 110 is less than a maximum thickness of the second side panel 120; and
a connection corner panel 130, configured to connect the first side panel 110 and the second side panel 120, wherein the connection corner panel 130 is provided with a corner panel first segment 131, a corner panel second segment 132 and a corner panel third segment 133 in sequence in the height direction of the housing 100, a maximum thickness of the corner panel second segment 132 is greater than a maximum thickness of the corner panel first segment 131, a maximum thickness of the corner panel third segment 133 is less than or equal to the maximum thickness of the corner panel second segment 132.

An outer contour of the housing 100 has various forms. Optionally, the housing 100 may be in a cylindrical structure, or in a rectangular structure, etc. Correspondingly, the housing opening 140 may be circular or rectangular. The embodiments of the present disclosure are all illustrated with the housing 100 being a rectangular structure and the housing opening 140 being rectangular, that is, one housing 100 includes two first side panels 110 arranged oppositely, and another two second side panels 120 arranged oppositely. The first side panel 110 and the second side panel 120 adjacent to each other are connected by the connection corner panel 130, that is, one housing 100 also includes four connection corner panels 130. The connection between the first side panel 110, the second side panel 120 and the connection corner panel 130 may be one of splicing, welding or integral connection.

An area of the first side panel 110 is greater than an area of the second side panel 120, that is, the first side panel 110 is a large surface side, and the second side panel 120 is a small surface side, that is, a region area of the first side panel 110 relative to the second side panel 120, in relation to the cover panel assembly 200 and the bare cell 400, will be larger.

In the present embodiment, the maximum thickness of the first side panel 110 is set to be less than the maximum thickness of the second side panel 120, that is, a distance between the first side panel 110 and the bare cell 400 is greater than a distance between the second side panel 120 and the bare cell 400. Thus, the risk of deformation or cracking of the first side panel 110 due to expansion stress of the bare cell 400 and the like is reduced. Correspondingly, the problem of squeezing damage caused by the first side panel 110 to the expanded bare cell 400 may also be avoided. The first side panel 110 is a main side panel with a larger area of the housing 100, that is, the use reliability of the entire housing 100 is improved.

An average thickness of the first side panel 110 is less than an average thickness of the second side panel 120, and the area of the first side panel 110 is greater than the area of the second side panel 120. Thus, the weight of the housing 100 may be effectively reduced to meet the requirements for lightweight of the housing 100.

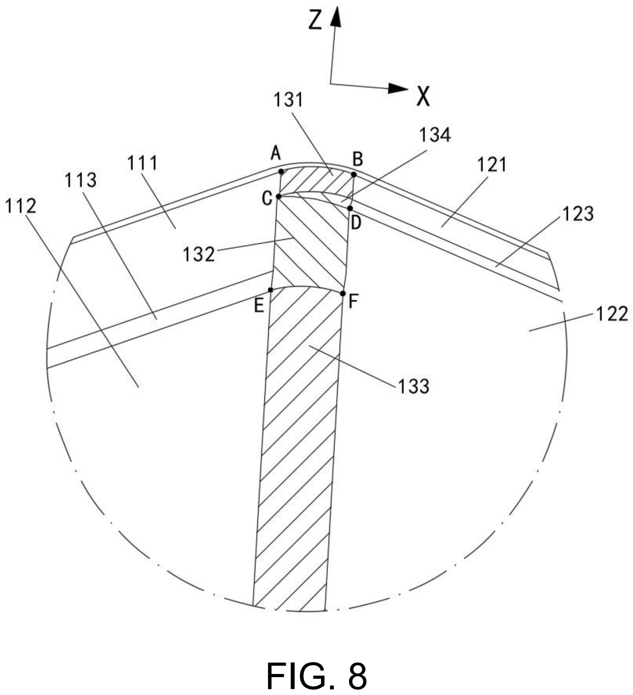

In addition, as shown in FIG. 8, FIG. 9 and FIG. 10, in the height direction of the housing 100, the corner panel first segment 131 is a region corresponding to four points A, B, C, and D, the corner panel second segment 132 is a region corresponding to four points C, D, E, and F, and the corner panel third segment 133 is a region corresponding to four points E, F, M, and N.

The corner panel first segment 131 corresponds to a welding region of the cover panel body 210 and the connection corner panel 130, the corner panel second segment 132 is a region mainly opposite to the cover panel assembly 200, and the corner panel third segment 133 is a region mainly opposite to the bare cell 400.

In the present embodiment, the connection corner panel 130 is set as the corner panel first segment 131, the corner panel second segment 132 and the corner panel third segment 133 connected in sequence. Since the corner panel first segment 131 is provided to connect with the cover panel assembly 200, and the corner panel second segment 132 is a region closely adjacent to the corner panel first segment 131, the pressure generated on the housing 100 by the gravity of the cover panel assembly 200 is mainly concentrated on the corner panel second segment 132. Thus, the thickness of the corner panel second segment 132 is set to be greater than that of the corner panel first segment 131, and greater than or equal to that of the corner panel third segment 133, that is, the corner panel second segment 132 is set to be the thickest, so that the corner panel second segment 132 is able to bear the pressure of the cover panel assembly 200 on the housing 100, and deformation or cracking will not occur due to the support provided to the cover panel assembly 200, thereby improving the use reliability of the battery cell.

In addition, the thickness of the corner panel third segment 133 is set to be less than or equal to the thickness of the corner panel second segment 132, so that a distance between the corner panel third segment 133 and the bare cell 400 is greater than or equal to a distance between the corner panel second segment 132 and the bare cell 400. Thus, the risk of deformation or cracking of the connection corner panel 130 due to expansion stress of the bare cell 400 and the like is reduced. Correspondingly, the problem of squeezing damage caused by the corner panel third segment 133 to the expanded bare cell 400 may also be effectively avoided.

In some embodiments, as shown in FIG. 8, in a direction pointing from a side close to the first side panel 110 toward a side close to the second side panel 120, the thickness of the corner panel second segment 132 gradually thickens; and/or,
in a direction pointing from a side close to the housing opening 140 toward a side away from the housing opening 140, the thickness of the corner panel second segment 132 gradually thickens.

A thickness difference between the maximum thickness and a minimum thickness of the corner panel second segment 132 is less than or equal to 0.3mm.

The direction pointing from the side close to the first side panel 110 toward the side close to the second side panel 120 is an X direction in FIG. 8, which may also be referred to as a horizontal direction of the connection corner panel 130; the direction pointing from the side close to the housing opening 140 toward the side away from the housing opening 140 is the reverse of the Z direction in FIG. 8, which may also be referred to as a vertical direction of the connection corner panel 130. That is, the corner panel second segment 132 in the present embodiment may gradually thicken in the horizontal direction, may gradually thicken in the vertical direction, or may gradually thicken in both the horizontal direction and the vertical direction (that is, the corner panel second segment 132 gradually thickens in its diagonal direction).

Taking the corner panel second segment 132 gradually thickening in its diagonal direction as an example for illustration, in a case where outer surfaces of the corner panel second segment 132 and the corner panel first segment 131 are flat, since the thickness of the corner panel second segment 132 is greater than that of the corner panel first segment 131, and the corner panel second segment 132 gradually thickens in its diagonal direction, a corner panel shoulder 134 as shown in FIG. 8 is formed. The corner panel shoulder 134 may support the cover panel body 210, that is, the cover panel body 210 not only receives the welding and fixing effect with the corner panel first segment 131 at the housing opening 140, but also receives the supporting effect of the corner panel shoulder 134, thereby improving the connection stability of the cover panel assembly 200 on the connection corner panel 130.

In addition, compared with the case where the corner panel second segment 132 gradually thickens in the diagonal direction, when the corner panel second segment 132 gradually thickens in the horizontal direction, a thickness of the corner panel second segment 132 on a side connected to the first side panel 110 is thinner and the strength is lower, which in turn causes a side of the corner panel second segment 132 close to the first side panel 110 to easily deform and crack. When the corner panel second segment 132 gradually thickens in the vertical direction, a thickness of the corner panel second segment 132 on a side connected to the corner panel first segment 131 is thinner and the strength is lower, which in turn causes the side of the corner panel second segment 132 close to the corner panel first segment 131 to easily deform and crack. When the corner panel second segment 132 gradually thickens in the diagonal direction, the above problems may be solved, that is, the problem of low strength of the corner panel second segment 132 on the side close to the first side panel 110 may be solved, and the problem of low strength of the corner panel second segment 132 on the side close to the corner panel first segment 131 may also be overcome, thereby improving the overall strength of the connection corner panel 130.

In the present embodiment, three forms of thickness increase of the corner panel second segment 132 in the horizontal direction, the vertical direction, and the diagonal direction are further described. The form of gradually thickening in the diagonal direction may simultaneously improve the strength of the corner panel second segment 132 on the side connected to the first side panel 110 and on the side connected to the corner panel first segment 131, enabling the corner panel shoulder 134 formed by the corner panel second segment 132 and the corner panel first segment 131 to effectively receive the gravity of the cover panel assembly 200, so as to avoid deformation and cracking problems of the connection corner panel 130 at the corner panel second segment 132.

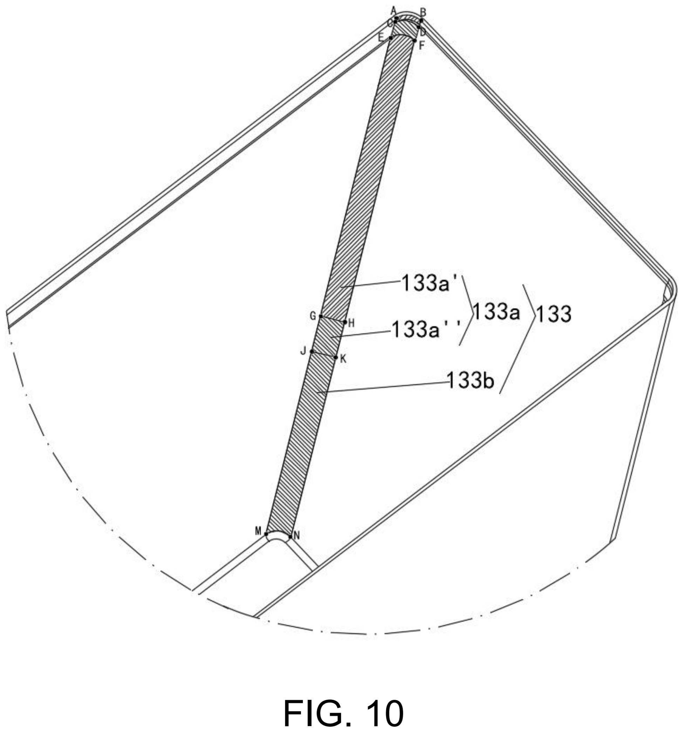

In some embodiments, as shown in FIG. 8 and FIG. 10, in the direction pointing from the side close to the first side panel 110 toward the side close to the second side panel 120, the thickness of the corner panel third segment 133 gradually thickens.

As shown in FIG. 10, the corner panel third segment 133 is a region within four points E, F, M, and N, and is also a main region of the connection corner panel 130. Since the connection corner panel 130 connects the first side panel 110 and the second side panel 120, and as described above, the maximum thickness of the first side panel 110 is less than the maximum thickness of the second side panel 120, that is, there is a wall thickness difference between the first side panel 110 and the second side panel 120, and the first side panel 110 is overall thinner than the second side panel 120, the connection corner panel 130 acts to evenly transition from the first side panel 110 to the second side panel 120. Therefore, the corner panel third segment 133 gradually thickens in the X direction, so as to implement the connection and transition effect of the connection corner panel 130 on the first side panel 110 and the second side panel 120.

In some embodiments, as shown in FIG. 10, the corner panel third segment 133 includes a first segment 133a and a second segment 133b sequentially connected in the height direction Z of the housing 100. The first segment 133a is provided close to the housing opening 140, and in the direction pointing from the side close to the first side panel 110 toward the side close to the second side panel 120, a thickness increase of the first segment 133a is greater than a thickness increase of the second segment 133b.

As shown in FIG. 10, the first segment 133a is a region corresponding to four points E, F, J, and K, and the second segment 133b is a region corresponding to four points J, K, M, and N. The second side panel 120 is provided for weight reduction, and a maximum thickness of a region corresponding to the first segment 133a is greater than a maximum thickness of a region corresponding to the second segment 133b. Thus, the first segment 133a and the second segment 133b have the same thickness on a side connected to the first side panel 110, and different thicknesses on a side connected to the second side panel 120, and a thickness of the region of the second side panel 120 corresponding to the first segment 133a connected thereto is greater. Therefore, the thickness increase of the first segment 133a needs to be greater than the thickness increase of the second segment 133b.

The thickness increase may specifically be a thickness variation per unit length, reflecting the degree of variation of the first segment 133a and the second segment 133b in the thickness direction. For example, the unit length may be 0.1mm, 0.5mm, 1mm, etc. The thickness increase of the first segment 133a is greater than the thickness increase of the second segment 133b, which means that in the direction pointing from the side close to the first side panel 110 toward the side close to the second side panel 120, a rate of thickness increase per unit length in the first segment 133a exceeds the rate of thickness change in the corresponding unit length of the second segment 133b. That is, within the corresponding unit length, the thickness of the first segment 133a is greater than the thickness of the second segment 133b. The first segment 133a is provided close to the corner panel second segment 132. If the corner panel second segment 132 serves as a direct support for the cover panel assembly 200, then the first segment 133a serves as an indirect support for the cover panel assembly 200. The setting that the thickness increase of the first segment 133a is greater than the thickness increase of the second segment 133b contributes to compensate for the problem of low strength of the first segment 133a on the side close to the first side panel 110, and improves the overall strength of the connection corner panel 130.

In some embodiments, as shown in FIG. 10, the first segment 133a includes a corner panel upper segment 133a' and a corner panel transition segment 133a" connected to each other. The corner panel transition segment 133a" is located between the corner panel upper segment 133a' and the second segment 133b. A thickness of the corner panel transition segment 133a" gradually reduces from the corner panel upper segment 133a' toward the second segment 133b.

A thickness difference between a maximum thickness and a minimum thickness of the corner panel upper segment 133a' is a first thickness difference x1, a thickness difference between a maximum thickness and a minimum thickness of the second segment 133b is a second thickness difference x2, x2<x1. For example, x1 is less than or equal to 0.4mm, and may specifically be 0.4mm, 0.35mm, 0.3mm, 0.25mm, 0.2mm, 0.15mm, or 0.1mm, x2 is less than or equal to 0.3mm, and may specifically be 0.3mm, 0.25mm, 0.2mm, 0.15mm, 0.1mm, or 0.05mm. Whether it is the corner panel upper segment 133a' or the second segment 133b, the thickness difference between the maximum thickness and the minimum thickness of either of them is mainly determined by the thicknesses of the first side panel 110 and the second side panel 120 connected thereto. For example, the minimum thickness of either of the corner panel upper segment 133a' or the second segment 133b is a thickness of a region connected to the first side panel 110, and the maximum thickness of either of the corner panel upper segment 133a' or the second segment 133b is a thickness of a region connected to the second side panel 120. To ensure the stability of the entire housing 100, generally, the thickness difference between the first side panel 110 and the second side panel 120 at the same horizontal height should not be greater than 0.4mm. Therefore, the thickness difference between the maximum thickness and the minimum thickness of the corner panel upper segment 133a' is less than or equal to 0.4mm. The region of the second side panel 120 connected to the second segment 133b is thinner than the region of the second side panel 120 connected to the first segment 133a, and the thickness difference of the second segment 133b is less than the thickness difference of the corner panel upper segment 133a', therefore, the thickness difference between the maximum thickness and the minimum thickness of the second segment 133b is set to be less than or equal to 0.3mm.

An inner surface of the corner panel transition segment 133a" is an inclined surface connecting an inner surface of the corner panel upper segment 133a' and the inner surface of the second segment 133b, wherein the inner surface is a side surface of the housing 100 close to the bare cell 400.

In this embodiment, the first segment 133a is divided into the corner panel upper segment 133a' and the corner panel transition segment 133a", that is, the corner panel transition segment 133a" is provided between the corner panel upper segment 133a' and the second segment 133b. The corner panel transition segment 133a" achieves the thickness transition between the corner panel upper segment 133a' and the second segment 133b. The corner panel transition segment 133a" strengthens the connection strength between the corner panel upper segment 133a' and the second segment 133b, avoids the influence of the sudden thickness change between the corner panel upper segment 133a' and the second segment 133b of the housing 100 on the mechanical strength of the housing 100, and improves the safety in the use of battery cell.

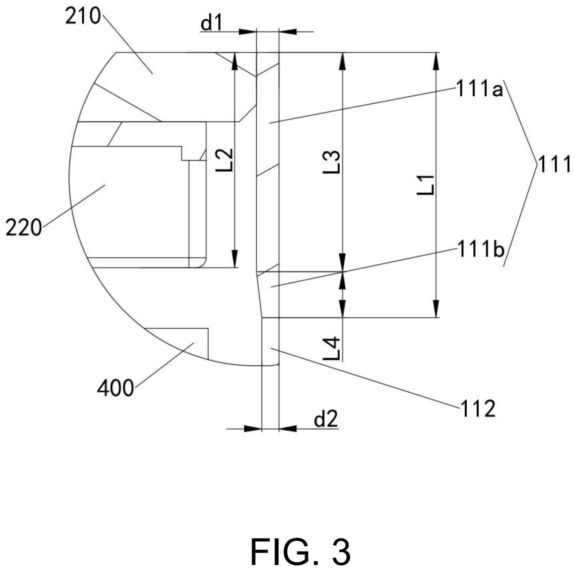

In some embodiments, as shown in FIG. 2 and FIG. 3, the first side panel 110 is provided with a first panel first segment 111 and a first panel second segment 112 connected to each other in the height direction of the housing 100. A maximum thickness of the first panel first segment 111 is greater than a maximum thickness of the first panel second segment 112, and the first panel first segment 111 is provided close to the housing opening 140.

The first panel first segment 111 is mainly set opposite to the cover panel assembly 200, the first panel second segment 112 is mainly set opposite to the bare cell 400, and the top of the first panel first segment 111 may be welded and positioned with the cover panel body 210.

In this embodiment, the first side panel 110 includes the first panel first segment 111 and the first panel second segment 112 connected vertically. Since the first panel first segment 111 needs to be welded and connected with the cover panel body 210, the thickness of the first panel first segment 111 is set to be relatively thick in order to prevent the first panel first segment 111 from being too thin during the processing, which may result in wavy edges that could affect the fit and welding between the housing 100 and the cover panel body 210. That is, the connection strength between the first side panel 110 and the cover panel body 210 is ensured. The first panel second segment 112 is designed to be thinner relative to the first panel first segment 111. This thinner design enables a distance between the bare cell 400 and the first side panel 110 to increase, avoids the squeezing damage of the housing 100 to the bare cell 400, and satisfies the requirements for lightweight of the housing 100.

In some embodiments, as shown in FIG. 2 and FIG. 3, the first panel first segment 111 includes a first panel upper segment 111a and a first panel transition segment 111b connected to each other. The first panel transition segment 111b is connected between the first panel upper segment 111a and the first panel second segment 112. A thickness of the first panel transition segment 111b gradually decreases from the first panel upper segment 111a toward the first panel second segment 112.

An inner surface of the first panel transition segment 111b is an inclined surface connecting an inner surface of the first panel first segment 111 and an inner surface of the first panel transition segment 111b, wherein the inner surface is the side surface of the housing 100 close to the bare cell 400.

As shown in FIG. 3, a thickness of the first panel upper segment 111a is d1, a thickness of the first panel second segment 112 is d2. To balance the strength requirements and lightweight requirements of the first side panel 110, exemplarily, a difference between d1 and d2 is less than or equal to 0.3mm and greater than or equal to 0.05mm, specifically the difference between d1 and d2 may be 0.05mm, 0.1mm, 0.15mm, 0.2mm, 0.25mm, or 0.3mm. In addition, since the first panel first segment 111 needs to be welded and fixed with the cover panel body 210, that is, the first panel first segment 111 will directly bear the gravity of the cover panel assembly 200, a length L3 of the first panel first segment 111 in the height direction of the housing 100 should be sufficiently long. However, the length L3 of the first panel first segment 111 being too long will also cause the lightweight requirements of the first side panel 110 difficult to satisfy. Therefore, a suitable length range needs to be set for the first panel first segment 111. Exemplarily, 0.5mm≤L3≤1.0mm, specifically the length L3 may be 0.5mm, 0.55mm, 0.6mm, 0.65mm, 0.7mm, 0.75mm, 0.8mm, 0.85mm, 0.9mm, 0.95mm, or 1.0mm. In addition, a length L4 of the first panel transition segment 111b should not be too long or too short. If the length L4 is too long, the dimension of the first panel second segment 112 will be reduced, causing the lightweight requirements of the first side panel 110 difficult to satisfy. If the length L4 is too short, a protruding edge is likely to be formed on an outer surface of the housing 100, affecting the flatness of the outer surface of the housing 100. Therefore, a suitable length range needs to be set for the first panel transition segment 111b. Exemplarily, 0.3mm≤L4≤1.0mm, specifically the length L4 may be 0.3mm, 0.4mm, 0.5mm, 0.6mm, 0.7mm, 0.8mm, 0.9mm, or 1.0mm.

In this embodiment, the first panel first segment 111 is divided into the first panel upper segment 111a and the first panel transition segment 111b, that is, the first panel transition segment 111b is provided between the first panel upper segment 111a and the first panel second segment 112. The first panel transition segment 111b achieves the thickness transition between the first panel upper segment 111a and the first panel second segment 112. The first panel transition segment 111b strengthens a connection strength between the first panel upper segment 111a and the first panel second segment 112, avoids the influence of the sudden thickness change between the first panel upper segment 111a and the first panel second segment 112 of the housing 100 on the mechanical strength of the housing 100, and improves the safety in the use of battery cell.

In some embodiments, as shown in FIG. 7, the first panel first segment 111 is connected with both the corner panel first segment 131 and the corner panel second segment 132, the first panel second segment 112 is connected with the corner panel third segment 133, and the thickness of the first panel second segment 112 is less than the maximum thickness of the corner panel third segment 133.

Exemplarily, a height of the first panel first segment 111 is equal to a sum of the corner panel first segment 131 and the corner panel second segment 132, and the first panel second segment 112 is equal in height to the corner panel third segment 133.

The maximum thickness of the corner panel third segment 133 is the thickness at a side where the corner panel third segment 133 is connected with the second side panel 120, the thickness of the first panel second segment 112 is a thickness at a side where the corner panel third segment 133 is connected with the first panel second segment 112, and the thickness of the first panel second segment 112 is less than the maximum thickness of the corner panel third segment 133. That is, at the same horizontal height, the thickness of the first panel second segment 112 is less than the thickness of the second side panel 120 in the corresponding region, which satisfies the lightweight requirements of the housing 100 without affecting the support of the housing 100 on the cover panel assembly 200.

In some embodiments, the second side panel 120 is provided with a second panel first segment 121 and a second panel second segment 122 in sequence in the height direction of the housing 100, a maximum thickness of the second panel first segment 121 is less than a maximum thickness of the second panel second segment 122, and the second panel first segment 121 is provided close to the housing opening 140.

The second panel first segment 121 is welded and positioned with the cover panel body 210. The second panel second segment 122 is primarily arranged oppositely to the cover panel assembly 200, excluding the cover panel body 210, as well as the bare cell 400.

The thickness of the second panel first segment 121 is less than the thickness of the second panel second segment 122. However, since the second panel first segment 121 also needs to be welded and fixed with the cover panel body 210, the thickness of the second panel first segment 121 may be the same as the thickness of the first panel first segment 111 to prevent the second panel first segment 121 from being too thin during the processing, which may result in wavy edges, that could affect the fit and welding between the housing 100 and the cover panel body 210. That is, the connection strength between the second side panel 120 and the cover panel body 210 is ensured. Exemplarily, the thickness of the second panel first segment 121 and the first panel first segment 111 are both 0.8mm, and the thickness of the second panel second segment 122 is 1.0mm.

The second side panel 120 in this embodiment includes the second panel first segment 121 and the second panel second segment 122 connected vertically, and the thickness of the second panel first segment 121 is less than the thickness of the second panel second segment 122, that is, in the case where outer surfaces of the second panel first segment 121 and the second panel second segment 122 are in the same plane, a second panel shoulder 123 is formed between the second panel first segment 121 and the second panel second segment 122, and the second panel shoulder 123 is in the same plane as the corner panel shoulder 134, which may jointly support the cover panel body 210 to ensure the connection stability of the cover panel assembly 200 relative to the housing 100.

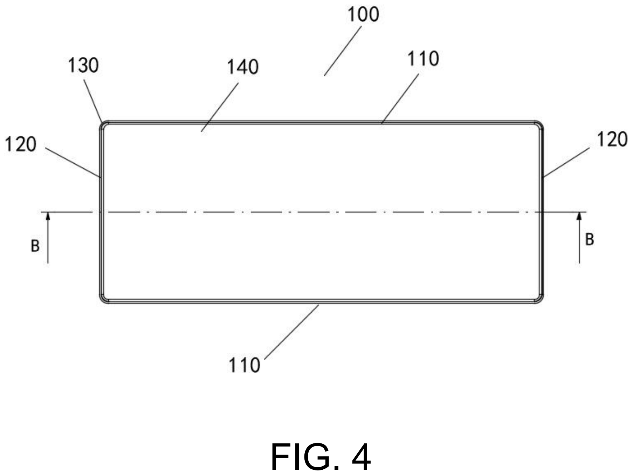

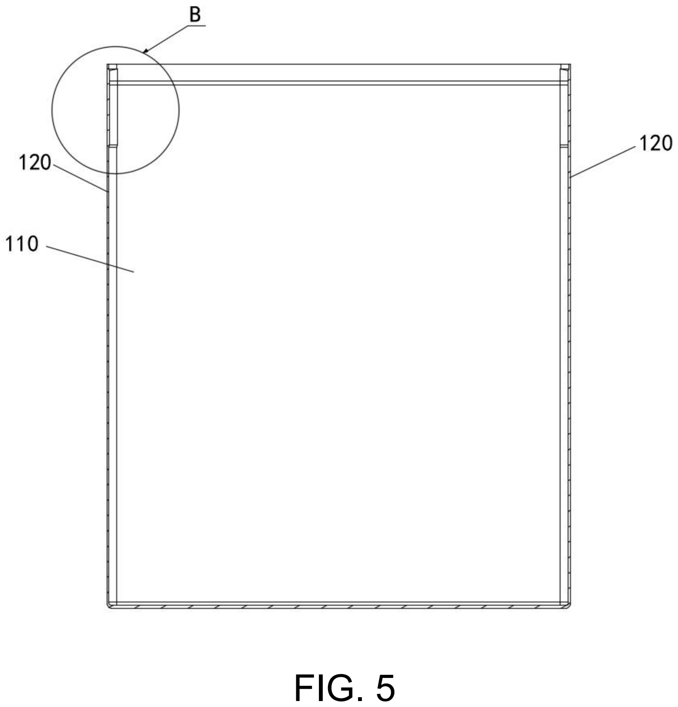

In some embodiments, as shown in FIG. 4 to FIG. 6, the second panel second segment 122 is provided with a first sub-segment 122a and a second sub-segment 122b connected to each other in the height direction of the housing 100. The first sub-segment 122a is provided close to the housing opening 140. A maximum thickness of the first sub-segment 122a is greater than a maximum thickness of the second sub-segment 122b. The first sub-segment 122a is connected with the corner panel second segment 132 and a part of the corner panel third segment 133, and the second sub-segment 122b is connected with another part of the corner panel third segment 133.

The first sub-segment 122a is connected with the corner panel second segment 132 and the first segment 133a of the corner panel third segment 133, and the second sub-segment 122b is connected with the second segment 133b of the corner panel third segment 133. The first sub-segment 122a is a region on the second side panel 120 that directly provides support for the cover panel assembly 200, that is, the first sub-segment 122a needs to be sufficiently high and sufficiently thick, but being too high or too thick makes it difficult to meet the lightweight requirements of the second side panel 120, therefore, it is necessary to set appropriate height and thickness for the first sub-segment 122a and the second sub-segment 122b. Exemplarily, a height of the first sub-segment 122a is 5 times to 15 times the height of the second panel first segment 121, and a height of the second sub-segment 122b is 3 times to 15 times the height of the first sub-segment 122a. Exemplarily, the thickness of the first sub-segment 122a is 1.0mm, the thickness of the second sub-segment 122b is 0.8mm, the height of the first sub-segment 122a is 10 times the height of the second panel first segment 121, and the height of the second sub-segment 122b is 10 times the height of the first sub-segment 122a.

The second panel second segment 122 in this embodiment includes the first sub-segment 122a and the second sub-segment 122b connected vertically, that is, the second sub-segment 122b is designed to be thinner relative to the first sub-segment 122a to meet the lightweight requirements of the housing 100.

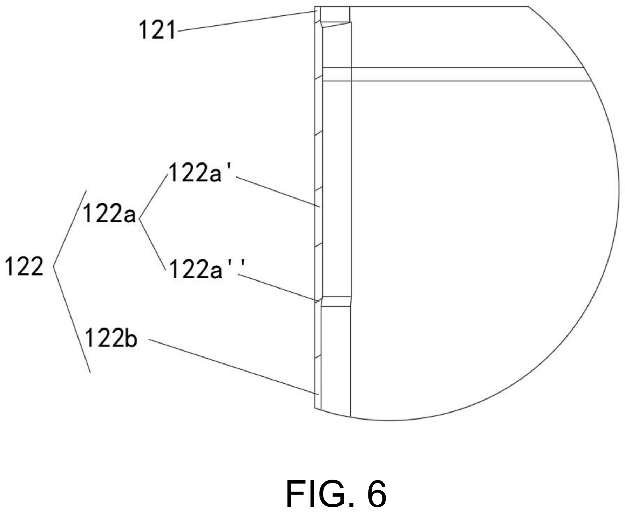

In some embodiments, as shown in FIG. 6, the first sub-segment 122a includes a second panel upper segment 122a' and a second panel transition segment 122a". A thickness of the second panel transition segment 122a" gradually reduces from the second panel upper segment 122a' toward the second sub-segment 122b.

An inner surface of the second panel transition segment 122a" is an inclined surface connecting an inner surface of the second panel upper segment 122a' and an inner surface of the second sub-segment 122b, wherein the inner surface is the side surface of the housing 100 close to the bare cell 400.

The second panel transition segment 122a" may be connected with the corner panel transition segment 133a".

A thickness difference between the second panel upper segment 122a' and the second sub-segment 122b is x3. To balance the strength requirements and lightweight requirements of the second side panel 120, x3 is less than or equal to 0.3mm and greater than or equal to 0.05mm, specifically x3 may be 0.05mm, 0.1mm, 0.15mm, 0.2mm, 0.25mm, or 0.3mm. In addition, a length of the second panel transition segment 122a" in the height direction of the housing 100 should not be too long or too short. If the length of the second panel transition segment 122a" is too long, the dimension of the second sub-segment 122b will be reduced, making it difficult to meet the lightweight requirements of the second side panel 120. If the length of the second panel transition segment 122a" is too short, a protruding edge is likely to be formed on the outer surface of the housing 100, affecting the flatness of the outer surface of the housing 100. Therefore, it is necessary to set an appropriate length range for the second panel transition segment 122a". Exemplarily, a length range of the second panel transition segment 122a" is 0.3mm to 1.0mm, specifically the length range may be 0.3mm, 0.4mm, 0.5mm, 0.6mm, 0.7mm, 0.8mm, 0.9mm, or 1.0mm.

In this embodiment, the first sub-segment 122a is divided into the second panel upper segment 122a' and the second panel transition segment 122a", that is, the second panel transition segment 122a" is provided between the second panel upper segment 122a' and the second sub-segment 122b. The second panel transition segment 122a" achieves the thickness transition between the second panel upper segment 122a' and the second sub-segment 122b. The second panel transition segment 122a" strengthens a connection strength between the second panel upper segment 122a' and the second sub-segment 122b, avoids the influence of the sudden thickness change between the second panel upper segment 122a' and the second sub-segment 122b of the housing 100 on the mechanical strength of the housing 100, and improves the safety in the use of battery cell.

In some embodiments, as shown in FIG. 7 and FIG. 8, the second panel first segment 121 is connected with the corner panel first segment 131, and the second panel second segment 122 is connected with both the corner panel second segment 132 and the corner panel third segment 133. The maximum thickness of the second panel second segment 122 is greater than or equal to the maximum thickness of the corner panel third segment 133, and less than or equal to the maximum thickness of the corner panel second segment 132.

Exemplarily, the second panel first segment 121 is equal in height to the corner panel first segment 131, and a height of the second panel second segment 122 is equal to a sum of the corner panel second segment 132 and the corner panel third segment 133.

The maximum thickness of the corner panel third segment 133 is a thickness at a side where the corner panel third segment 133 is connected with the second panel second segment 122, and the maximum thickness of the corner panel second segment 132 is a thickness of at least a partial region at a side where the corner panel second segment 132 is connected with the second panel second segment 122.

Due to the thickness of the corner panel second segment 132 being greater than or equal to the thickness of the corner panel third segment 133, and the second panel second segment 122 being connected with both the corner panel second segment 132 and the corner panel third segment 133, the thickness of the second panel second segment 122 is greater than or equal to the maximum thickness of the corner panel third segment 133, and less than or equal to the maximum thickness of the corner panel second segment 132, so as to satisfy the smooth transition between the second panel second segment 122 and the connection corner panel 130, and improve the stability of the housing 100.

Based on the same inventive concept, as shown in FIG. 1, FIG. 2 and FIG. 3, the present disclosure also provides a battery cell, including:
the housing 100 as described in any of the above embodiments;
a cover panel assembly 200, covering the housing opening 140, and forming an accommodation space 300 with the housing 100; and
a bare cell 400, located in the accommodation space 300;
wherein, an edge of the corner panel second segment 132 away from the housing opening 140 is located above the bare cell 400, and at least a part of the corner panel third segment 133 is disposed opposite to the bare cell 400.

As an example, the housing 100 may be an aluminum housing or a steel housing.

As an example, the top of the housing 100 is configured with the housing opening 140.

As an example, the insulation member 220 may be a plastic member.

As an example, the cover panel assembly 200 further includes a terminal post 230 penetrating through the cover panel body 210 and the insulation member 220. The terminal post 230 may include a positive terminal post and a negative terminal post. Moreover, the terminal post 230 is connected to the cover panel body 210 in an insulated and sealed manner.

As an example, the bare cell 400 includes a plurality of positive electrode sheets, a plurality of negative electrode sheets, and a separator isolating the positive electrode sheets and the negative electrode sheets. The positive electrode sheets, the negative electrode sheets and the separator may form a laminated structure or a wound structure. A part of each positive electrode sheet protrudes from the bare cell 400 to form a positive tab, and the positive tab is electrically connected to the positive terminal post. A part of each negative electrode sheet protrudes from the bare cell 400 to form a negative tab, and the negative tab is electrically connected to the negative terminal post.

Since the corner panel second segment 132 is the thickest region in the connection corner panel 130, i.e., being closest to the bare cell 400, in order to prevent squeezing damage from being caused to the bare cell 400 after expansion, the corner panel second segment 132 is provided above the bare cell 400.

Since the maximum thickness of the corner panel third segment 133 is less than or equal to the maximum thickness of the corner panel second segment 132, especially in the case where the maximum thickness of the corner panel third segment 133 is less than the maximum thickness of the corner panel second segment 132, it means that the corner panel third segment 133 is farther away from the bare cell compared to the corner panel second segment 132, part or all of the corner panel third segment 133 is set opposite to the bare cell 400, which is not easy to cause squeezing damage to the bare cell 400 after expansion.

In some embodiments, as shown in FIG. 3, the cover panel assembly 200 includes the cover panel body 210 and the insulation member 220 connected to a side of the cover panel body 210 close to the accommodation space 300, and
in the height direction of the housing 100, a distance from an edge of the first panel second segment 112 close to the first panel first segment 111 to the housing opening 140 is a first distance L1, a distance from a surface of the insulation member 220 away from the cover panel body 210 to the housing opening 140 is a second distance L2, and the first distance L1 is greater than the second distance L2.

As an example, the cover panel body 210 may be welded to the first panel first segment 111 of the first side panel 110.

The first side panel 110 includes the first panel first segment 111 and the first panel second segment 112 connected vertically. Since the first panel first segment 111 is close to the housing opening 140 and needs to be connected to the cover panel body 210, the thickness of the first panel first segment 111 is set to be relatively thick in order to prevent the first panel first segment 111 from being too thin during the processing, which may result in wavy edges. In this way, the connection strength between the first panel first segment 111 and the cover panel body 210 is ensured. As for the first panel second segment 112 which is farther away from the housing opening 140, even if the thickness of the first panel second segment 112 is set to be thinner, it will not have an adverse effect on the connection between the housing 100 and the cover panel body 210. Therefore, in the foregoing embodiments, setting the thickness of the first panel second segment 112 to be thinner may not only achieve the purpose of reducing the battery weight and manufacturing cost, but also help to expand the accommodation space 300, so that the battery may have a larger energy density.

However, in order to achieve the above advantageous effects, the positions of the first panel first segment 111 and the first panel second segment 112 need to be set reasonably. If L1≤L2, the first panel second segment 112 would extend to a position too close to the housing opening 140, which would cause the dimension of the first panel first segment 111 along the height direction of the housing 100 to be too small. During the processing of the housing 100, the housing opening 140 would still have a risk of deformation, which may reduce the connection strength between the housing 100 and the cover panel body 210. Therefore, in this embodiment, L1 and L2 are defined as L1>L2, which may enable the dimension of the first panel first segment 111 along the height direction of the housing 100 to be larger, sufficient to ensure that the housing opening 140 will not be deformed during the processing of the housing 100.

In the battery cell provided by the embodiments of the present disclosure, the distance L1 from the edge of the first panel second segment 112 close to the first panel first segment 111 to the housing opening 140, and the distance L2 from the surface of the insulation member 220 away from the cover panel body 210 to the housing opening 140 are defined as L1>L2, which may enable the dimension of the first panel second segment 112 along the height direction of the housing 100 to be larger, further ensuring that the housing opening 140 will not be deformed, thereby ensuring a higher connection strength between the housing 100 and the cover panel body 210, which helps to improve the sealing performance and safety performance of the battery cell.

Based on the same inventive concept, the present disclosure also provides a battery. Specifically, the battery includes the battery cell as described in any one of the above embodiments.

As an example, when the battery includes the battery cell described in the above embodiments, the battery may have all the advantages and advantageous effects of the battery cell described in the above embodiments, which will not be repeated here.

## Claims

1. A housing (100), having a housing opening (140) along a height direction of the housing (100), and the housing (100) comprising:
a first side panel (110) and a second side panel (120), arranged adjacently along a circumferential direction of the housing opening (140), wherein a maximum thickness of the first side panel (110) is less than a maximum thickness of the second side panel (120); and
a connection corner panel (130), configured for connecting the first side panel (110) and the second side panel (120),
wherein
the connection corner panel (130) is provided with a corner panel first segment (131), a corner panel second segment (132) and a corner panel third segment (133) in sequence along the height direction of the housing (100),
a maximum thickness of the corner panel second segment (132) is greater than a maximum thickness of the corner panel first segment (131); and
a maximum thickness of the corner panel third segment (133) is less than or equal to the maximum thickness of the corner panel second segment (132).

2. The housing (100) according to claim 1, wherein
in a direction pointing from a side close to the first side panel (110) toward a side close to the second side panel (120), the thickness of the corner panel second segment (132) gradually thickens; and/or,
in a direction pointing from a side close to the housing opening (140) toward a side away from the housing opening (140), the thickness of the corner panel second segment (132) gradually thickens.

3. The housing (100) according to claim 2, wherein
a thickness difference between the maximum thickness and a minimum thickness of the corner panel second segment (132) is less than or equal to 0.3mm.

4. The housing (100) according to claim 1, wherein
in a direction pointing from a side close to the first side panel (110) toward a side close to the second side panel (120), a thickness of the corner panel third segment (133) gradually thickens.

5. The housing (100) according to claim 4, wherein
the corner panel third segment (133) comprises a first segment (133a) and a second segment (133b) sequentially connected in the height direction of the housing (100),
the first segment (133a) is provided close to the housing opening (140),
in the direction pointing from the side close to the first side panel (110) toward the side close to the second side panel (120), a thickness increase of the first segment (133a) is greater than a thickness increase of the second segment (133b).

6. The housing (100) according to claim 5, wherein
the first segment (133a) comprises a corner panel upper segment (133a') and a corner panel transition segment (133a") connected to each other,
the corner panel transition segment (133a") is located between the corner panel upper segment (133a') and the second segment (133b), and
a thickness of the corner panel transition segment (133a') gradually reduces from the corner panel upper segment (133a') toward the second segment (133b),
wherein
a thickness difference between a maximum thickness and a minimum thickness of the corner panel upper segment (133a') is less than or equal to 0.4mm, and
a thickness difference between a maximum thickness and a minimum thickness of the second segment (133b) is less than or equal to 0.3mm.

7. The housing (100) according to claim 1, wherein
the first side panel (110) is provided with a first panel first segment (111) and a first panel second segment (112) connected to each other in the height direction of the housing (100),
a maximum thickness of the first panel first segment (111) is greater than a maximum thickness of the first panel second segment (112), and
the first panel first segment (111) is provided close to the housing opening (140).

8. The housing (100) according to claim 7, wherein
the first panel first segment (111) comprises a first panel upper segment (111a) and a first panel transition segment (111b) connected to each other,
the first panel transition segment (111b) is connected between the first panel upper segment (111a) and the first panel second segment (112), and
a thickness of the first panel transition segment (111b) gradually reduces from the first panel upper segment (111a) toward the first panel second segment (112).

9. The housing (100) according to claim 8, wherein
the first panel upper segment (111a) is connected with both the corner panel first segment (131) and the corner panel second segment (132),
the first panel second segment (112) is connected with the corner panel third segment (133), and
the thickness of the first panel second segment (112) is less than the maximum thickness of the corner panel third segment (133),
wherein
a thickness difference between the first panel upper segment (111a) and the first panel second segment (112) is less than or equal to 0.3mm,
a length of the first panel first segment (111) in the height direction of the housing (100) is greater than or equal to 0.5mm, and
a length of the first panel transition segment (111b) in the height direction of the housing (100) is greater than or equal to 0.3mm.

10. The housing (100) according to claim 1, wherein
the second side panel (120) is provided with a second panel first segment (121) and a second panel second segment (122) in sequence in the height direction of the housing (100),
a maximum thickness of the second panel first segment (121) is less than a maximum thickness of the second panel second segment (122), and
the second panel first segment (121) is provided close to the housing opening (140).

11. The housing (100) according to claim 10, wherein
the second panel second segment (122) is provided with a first sub-segment (122a) and a second sub-segment (122b) connected to each other in the height direction of the housing (100),
the first sub-segment (122a) is provided close to the housing opening (140),
a maximum thickness of the first sub-segment (122a) is greater than a maximum thickness of the second sub-segment (122b),
the first sub-segment (122a) is connected with the corner panel second segment (132) and a part of the corner panel third segment (133), and
the second sub-segment (122b) is connected with another part of the corner panel third segment (133).

12. The housing (100) according to claim 11, wherein
the first sub-segment (122a) comprises a second panel upper segment (122a') and a second panel transition segment (122a"), and
a thickness of the second panel transition segment (122a") gradually reduces from the second panel upper segment (122a') toward the second sub-segment (122b),
wherein
a thickness difference between the second panel upper segment (122a') and the second sub-segment (122b) is less than or equal to 0.3mm, and
a length of the second panel transition segment (122a") in the height direction of the housing (100) is greater than or equal to 0.3mm.

13. The housing (100) according to claim 10, wherein
the second panel first segment (121) is connected with the corner panel first segment (131),
the second panel second segment (122) is connected with both the corner panel second segment (132) and the corner panel third segment (133), and
the maximum thickness of the second panel second segment (122) is greater than or equal to the maximum thickness of the corner panel third segment (133), and less than or equal to the maximum thickness of the corner panel second segment (132).

14. The housing (100) according to claim 1, wherein
an area of the first side panel (110) is greater than an area of the second side panel (120).

15. A battery cell, comprising:
the housing (100) according to claim 1;
a cover panel assembly (200), covering the housing opening (140) and forming an accommodation space (300) with the housing (100); and
a bare cell (400), located in the accommodation space (300);
wherein
an edge of the corner panel second segment (132) away from the housing opening (140) is located above the bare cell (400), and
at least a part of the corner panel third segment (133) is disposed opposite to the bare cell (400).
